# EUROPÄISCHE PATENTSCHRIFT

(11) **EP 1 521 917 B1**
(45) Veröffentlichungstag und Bekanntmachung des Hinweises auf die Patenterteilung: **23.01.2008**
(21) Anmeldenummer: 03762439.2
(22) Anmeldetag: 02.07.2003
(51) Int. Cl.: F16D 48/06

(54) **VERFAHREN UND VORRICHTUNG ZUM VERBESSERN DER FUNKTIONSSICHERHEIT BEI DER BETÄTIGUNG EINER KUPPLUNG UND/ODER EINES GETRIEBES**
METHOD AND DEVICE FOR IMPROVING THE FUNCTIONAL SAFETY WHEN ACTUATING A CLUTCH AND/OR A TRANSMISSION
PROCEDE ET DISPOSITIF PERMETTANT D'AMELIORER LA SECURITE DE FONCTIONNEMENT LORS DE L'ACTIONNEMENT D'UN EMBRAYAGE ET/OU D'UNE BOITE DE VITESSES

(30) Priorität: 04.07.2002 DE 10230059
(43) Veröffentlichungstag der Anmeldung: 13.04.2005
(73) Patentinhaber: LuK Lamellen und Kupplungsbau Beteiligungs KG, 77815 Bühl (DE)
(72) Erfinder: ZIMMERMANN, Martin, 77880 Sasbach (DE); KÜPPER, Klaus, 77815 Bühl (DE)
(86) Internationale Anmeldenummer: PCT/DE2003/002195
(87) Internationale Veröffentlichungsnummer: WO 2004/005743

(56) Entgegenhaltungen:
- WO-A-96/25612
- DE-A- 10 138 725

## Beschreibung

Die Erfindung betrifft ein Verfahren und eine Vorrichtung zum Verbessern der Funktionssicherheit einer elektronischen Steuervorrichtung, insbesondere zur Betätigung einer Kupplung und/oder eines Getriebes in einem Fahrzeugantriebsstrang.

In modernen Kraftfahrzeugen werden zunehmend automatisierte Kupplungen, vorzugsweise in Verbindung mit automatisierten Schaltgetrieben, eingesetzt. Damit wird nicht nur der Fahrkomfort erhöht, sondern es wird auch eine Verbrauchsminderung erzielt, da infolge entsprechend ausgelegter elektronischer Steuerungen bzw. Programme in einem langen Gang gefahren wird.

Der nächstliegende bekannt gewordene Stand der Technik wird beschrieben in DE-10138725.

An die Betriebszuverlässigkeit bzw. Funktionalität solcher Steuervorrichtungen werden hohe Anforderungen gestellt. Beispielsweise dürfen Fehler infolge zu hoher elektromagnetischer Einstrahlungen nicht dazu führen, dass eine dabei ausgelöste Notlaufstrategie nicht mehr verlassen wird, obwohl die störende elektromagnetische Einstrahlung nicht mehr vorhanden ist und die Notlaufstrategie für normale Weiterfahrt ungeeignet ist. Der Fahrer wäre in diesem Fall gezwungen, beispielsweise durch Aus- und Einschalten der Zündung die Steuervorrichtung in einen Reset-Zustand zu bringen.
Der Erfindung liegt die Aufgabe zugrunde, die Funktionssicherheit bzw. Zuverlässigkeit solcher elektronischer Steuervorrichtungen zu verbessern.

Die Lösung der Erfindungsaufgabe wird mit einem Verfahren zum Verbessern der Funktionssicherheit einer elektronischen Steuervorrichtung, insbesondere zur Betätigung einer Kupplung und/oder eines Getriebes in einem Fahrzeugantriebsstrang erzielt, das folgende Schritte enthält:
- Feststellen, ob ein Lagereglerfehler, der dadurch definiert ist, dass ein elektrischer Aktor von einem Steuersignal zum Anfahren einer von einer augenblicklichen Ist-Position abweichenden Soll-Position angesteuert wird und die Soll-Position nicht anfährt, vorhanden ist, und falls ja,
- Feststellen, ob der Aktorstrom größer ist als ein vorbestimmter Schwellwert; und falls ja
- Setzen eines "Blockade-Flag" bzw. "Blockade-Fehler-Flag" und falls nein
- Setzen eines "EMV-Flag", bzw. "Elektromagnetische Verträglichkeits-Fehler-Flag".

Vorteilhafterweise bleibt das "EMV-Flag" mindestens während einer vorbestimmten Zeitdauer gesetzt.

Bevorzugt ist das Verfahren derart, dass bei gesetztem "EMV-Flag" keine für den Fahrer unerwartete Momentenreaktion am Fahrzeugantriebsstrang erfolgen kann.

Wenn der elektrische Aktor ein Aktor zum Betätigen einer zwischen einem Motor und einem Getriebe eines Fahrzeugs angeordneten Kupplung ist, wird das EMV-Flag vorteilhafter Weise erst rückgesetzt, wenn nach Feststellen der Beendigung des Lagereglerfehlers das Getriebe in einem Neutralgang ist oder das Kupplungsmoment Null beträgt oder eine Schaltabsicht festgestellt wird oder die Kupplung zum Anhalten geöffnet wird.

Bei einer weiteren vorteilhaften Ausgestaltung des Verfahrens wird nach Ausschalten der Zündung das EMV-Flag rückgesetzt, anschließend wird überprüft, ob ein Lagereglerfehler vorhanden ist und, falls nicht, ein Stillsetzschritt durchgeführt.

Eine weitere Lösung der vorgenannten Aufgabe wird mit einer Vorrichtung zum Verbessern der Funktionssicherheit einer elektronischen Steuervorrichtung, insbesondere zur Betätigung einer Kupplung und/oder eines Getriebes in einem Fahrzeugantriebsstrang gelöst, die enthält, einen von einer Endstufe gespeisten elektrischen Aktor mit einem Betätigungsglied, einen Sensor zum Erfassen der Position des Betätigungsgliedes, eine Strommesseinrichtung in einer Zuleitung zu dem Aktor und ein mit der Endstufe, dem Sensor und dem Strommessgerät verbundenes elektronisches Steuergerät mit einem Mikroprozessor und zugehörigen Speichereinrichtungen, das abhängig von Eingangssignalen ein Ausgangssignal zum Ansteuern der Endstufe derart erzeugt, dass der Aktor das Betätigungsglied bei fehlerfreier Funktion in eine vorbestimmte Soll-Position bewegt, wobei der Betrieb des Steuergerätes bei Auftreten eines Lagereglerfehlers nach einem Verfahren entsprechend einem der Ansprüche 1 bis 5 erfolgt.

Die Erfindung ist, soweit sie nicht speziell für eine Steuervorrichtung zur Betätigung einer Kupplung und/oder eines Getriebes in einem Fahrzeugantriebsstrang vorgesehen ist, ganz allgemein für elektronische Steuervorrichtungen von Aktoren geeignet.

Die Erfindung wird im Folgenden anhand schematischer Zeichnungen beispielsweise und mit weiteren Einzelheiten erläutert.

Es stellen dar:
- Fig. 1: ein Blockschaltbild einer Steuervorrichtung, mit der EMV bedingte Fehler erkennbar sind,
- Fig. 2: ein Flussdiagramm zur Eriäuterung eines Verfahrens zum Erkennen von EMV Fehlern,
- Fig. 3: ein Blockschaltbild einer Vorrichtung, die gegen kurzzeitige Ausfälle der Versorgungsspannung gesichert ist.

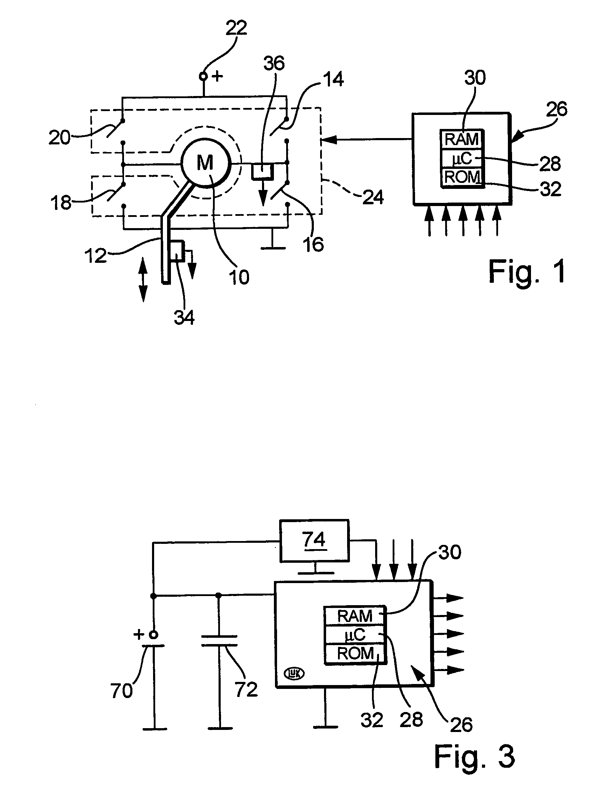

Gemäß Fig. 1 ist ein als Elektromotor ausgebildeter Aktor 10, mit dem beispielsweise ein Betätigungsglied 12 einer automatisierten Kupplung eines Fahrzeugs bewegbar ist, über vier elektronische Schalter 14, 16, 18 und 20 mit einer Stromquelle 22 verbunden. Je nachdem, ob die Schalter 14 und 18 geschlossen und die Schalter 16 und 20 geöffnet oder die Schalter 14 und 18 geöffnet und die Schalter 16 und 20 geschlossen sind, bewegt der Aktor 10 das Betätigungsglied 12 in die eine oder andere Richtung. Die Schalter 14, 16, 18 und 20 können beispielsweise FETs sein, die in einer gestrichelt eingezeichneten Endstufe 24 enthalten sind, die von einem elektronischen Steuergerät 26 angesteuert wird, das in an sich bekannter Weise aufgebaut ist und einen Mikroprozessor mit einem Speicher mit wahlfreiem Zugriff (RAM) und einem nur Lesespeicher (ROM).

Aufbau und Funktion der bisher beschriebenen Vorrichtung sind an sich bekannt und werden daher nicht im einzelnen erläutert. Im ROM des Steuergerätes 26 sind Algorithmen abgelegt, entsprechend denen das Steuergerät, abhängig von an seinen Eingängen liegenden Signalen den Aktor 10 beispielsweise durch Pulsweiten modulierte Ansteuerung der Schalter steuert. Da eine Kupplung für ruckfreien Betrieb und Übertragung eines jeweils genau vorbestimmten Drehmoments sehr präzise angesteuert werden muss, wird die Stellung des Betätigungsgliedes 12 vorzugsweise von einem Stellungssensor 28 erfasst und an das Steuergerät 26 rückgemeldet, so dass die Kupplung in geregelter Weise betätigt wird.

In der Praxis hat sich bei EMV Messungen herausgestellt, dass ab einer gewissen Feldstärke trotz einwandfreier Vorgabe der Sollstellung des Betätigungsgliedes 12 der Aktor 10 diese Sollstellung nicht anfährt. Das Steuergerät 26 erkennt dies als Lagereglerfehler, der auch dann auftritt, wenn beispielsweise die Übertragungsstrecke zwischen dem Betätigungsglied 12 und der Kupplung selbst, beispielsweise zwischen einem Geber- und Nehmerzylinder blockiert oder unterbrochen ist. Bekannt ist, dass die Steuerung in diesem Fall in einen Shut-Down-Modus übergeht, der erst bei einem Ausschalten und Wiederanschalten der Zündung zurückgenommen wird.

Eine Blockade im Fahrbetrieb kann auftreten, wenn sich die Strecke zwischen einem Geberzylinder und einem Nehmerzylinder (hydraulische Übertragungsstrecke; das Betätigungsglied 12 ist dann mit dem Geberzylinder verbunden) aufgrund von Temperaturausdehnungen aufweitet bzw. bei niedrigen Temperaturen aufpumpt. Dabei kann es vorkommen, dass die Kupplung nicht vollständig ausgerückt wird, was erkennbar ist, wenn der Stellungssensor 28 hinter der hydraulischen Übertragungsstrecke unmittelbar an beispielsweise dem Ausrückhebel der Kupplung angebracht ist. Für den Fall des nicht vollständigen Ausrückens der Kupplung ist bereits eine Strategie bekannt, die diesen Fehler aufhebt, ohne in einem Shut-Down-Modus zu enden.

Eine Blockade der Strecke zwischen Aktor 10 und Kupplung, die in jeder Betätigungsstellung der Kupplung auftreten kann, würde, wenn das System nicht in den Shut-Down-Zustand übergeht, bei dem die Stromzufuhr zum Aktor 10 abgeschaltet wird, zur thermischen Zerstörung des Aktors 10 führen und/oder weitere Schäden im Betätigungsmechanismus verursachen.

Ein durch elektromagnetische Einstrahlung bedingter Lagereglerfehler ist i. A. von der Frequenz und der Feldstärke der Strahlung abhängig und kann in jeder Betätigungsstellung der Kupplung auftreten. Mit bekannten Strategien kann ein solcher Lagereglerfehler nicht von einem Lagereglerfehler unterschieden werden, der auf andere Störungen, wie Blockade, Ein- oder Abklemmen eines Hydraulikschlauches usw. zurückzuführen ist. Da ein EMV Einfluss in der Regel nur kurzzeitig andauert, ist es zweckmäßig, einen durch mangelnde elektromagnetische Verträglichkeit bedingten Lagereglerfehler zu erkennen, so dass die Aktivierung einer dadurch bedingten Notlaufstrategie ohne Zutun des Fahrers wieder verlassen wird.

Durch unzuträglich hohe elektromagnetische Felder bedingte Störungen können sich auf zwei unterschiedliche Weisen auswirken:
- Die angesteuerten elektronischen Schalter 14, 16, 20 und 18 werden nicht bzw. nicht richtig durchgeschaltet, so dass die Ansteuerung des Aktors 10 fehlerhaft ist;
- es kann ein "heißer Pfad" geschaltet werden, indem beispielsweise die Schalter 18 und 20 und/oder 14 und 16 zumindest teilweise durchgeschaltet werden.

Um EMV bedingte Lagereglerfehler von durch eine Blockierung oder mechanische Fehler bedingten Lagereglerfehlern zu erkennen, ist in dem Strompfad zum Motor eine Strommesseinrichtung 36 vorgesehen, die mit einem Eingang des Steuergeräts 26 verbunden ist.

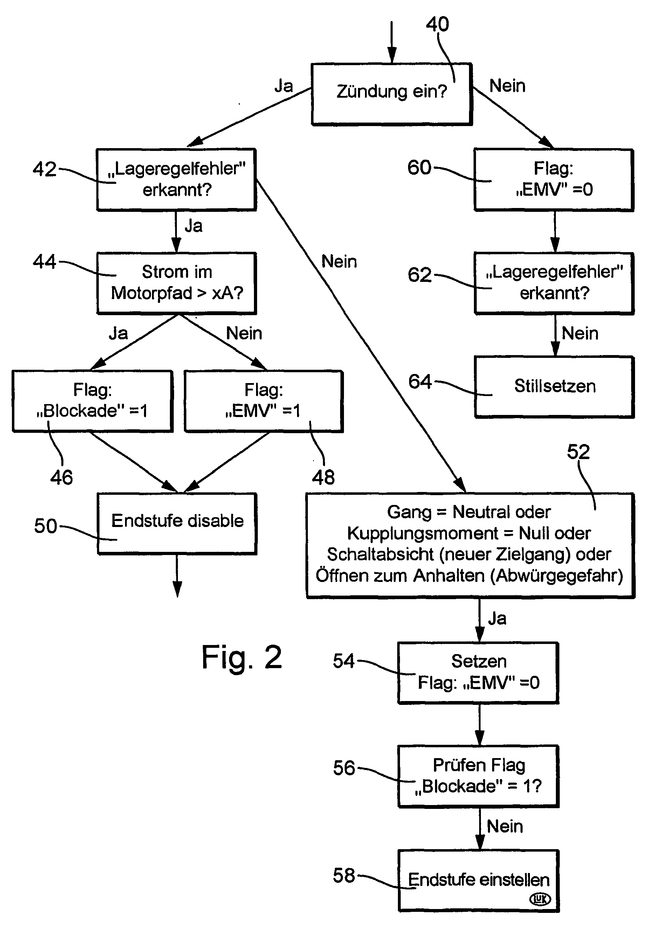

Anhand der Fig. 2 wird ein Verfahren erläutert, mit dem ein EMV bedingter Fehler erkannt werden kann und das einen solchen erkannten Fehler weiterverarbeitet..

In einem ersten Schritt 40 des routinemäßig ablaufenden Verfahrens wird festgestellt, ob die Zündung eingeschaltet ist. Ist dies der Fall, so wird im Schritt 42 überprüft, ob ein Lagereglerfehler vorhanden ist, was dadurch erkannt wird, dass der Stellungssensor 28 sich nicht in seine Sollposition bewegt. Wird ein Lagereglerfehler erkannt, so wird im Schritt 44 überprüft, ob der Strom im Motorpfad (gemessen mittels der Stromeinrichtung 36) länger als eine vorbestimmte Zeitdauer über einem vorbestimmten Wert liegt. Ist dies der Fall, so liegt ein Blockadefehler vor und im Schritt 46 wird ein Blockade Flag auf 1 gesetzt. Liegt kein Blockadefehler vor, so wird dies als EMV Fehler gewertet und im Schritt 48 ein EMV Flag auf 1 gesetzt. Bei gesetztem Blockade Flag oder gesetztem EMV Flag schreitet das Verfahren zum Schritt 50 fort, in dem die Endstufe (z. B. 24 in Fig. 1) außer Betrieb gesetzt wird, sodass eine Beschädigung oder sonstige Fehlfunktion des Systems vermieden wird. Vom Schritt 50 kehrt das Verfahren routinemäßig zum Schritt 40 zurück.

Es versteht sich, dass bei außer Betrieb gesetzter Endstufe eine Legereglerfehlererkennung nicht mehr möglich ist. Weiter sei an dieser Stelle darauf hingewiesen, dass das EMV Flag im Schritt 50 auch gesetzt wird, wenn beispielsweise die Zuleitung zum Aktor 10 unterbrochen ist. Dieser Fehler, der auch gesondert festgestellt werden könnte, indem für die Diagnosezwecke gezielt der Widerstand der Leitung gemessen wird, kann hinsichtlich seiner Auswirkungen auf das Anfahren einer Notlaufstrategie behandelt werden wie ein EMV Fehler.

Wird im Schritt 42 kein Lagereglerfehler erkannt, so wird im Schritt 52 überprüft, ob eine der Bedingungen Getriebe im Neutralgang oder Kupplungsmoment gleich Null oder Schaltabsicht vorhanden oder Kupplung zum Anhalten geöffnet vorliegt. Ist dies der Fall, so wird im Schritt 54 das EMV Flag auf Null rückgesetzt. Die vorgenannten Zustände sind Beispiele dafür, dass keine für den Fahrer (die Fahrerin) unerwarteten Momentenreaktionen im Antriebsstrang auftreten, wenn die Kupplung ihren normalen Betrieb wieder aufnimmt bzw. die Endstufe in Betrieb gesetzt wird. Anschließend wird im Schritt 56 geprüft, ob das Blockade Flag gesetzt ist. Ist dies nicht der Fall, wird im Schritt 58 die Endstufe in Betrieb gesetzt, so dass eine Kupplungsbetätigung entsprechend einem aktiven Programm erfolgt. Ist das Blockade Flag gesetzt, so kann die Endstufe nicht in Betrieb gesetzt werden.

Vorteilhaft ist, das EMV Flag jeweils erst dann auf Null zu setzen, wenn nach Setzen des Flags eine vorbestimmte Zeitdauer vergangen ist. Damit sind schädliche Auswirkungen eines EMV Fehlers, beispielsweise das Schalten eines heißen Pfades, besser geschützt.

Wird im Schritt 40 festgestellt, dass die Zündung ausgeschaltet ist, beispielsweise zum Stillsetzen des Fahrzeugs, so wird im Schritt 60 das möglicherweise gesetzte EMV Flag rückgesetzt. Im Schritt 62 wird dann überprüft, ob ein Lagereglerfehler vorhanden ist. Ist dies nicht der Fall, läuft eine Stillsetzroutine ab, innerhalb der die Kupplung beispielsweise bei eingelegtem Gang geschlossen wird, um den Stillstand des Fahrzeugs durch das Motorloslaufmoment zu unterstützen.

Vorteilhafterweise wird routinemäßig überprüft, ob das EMV Flag oder das Blockade Flag gesetzt sind. Ist dies der Fall, wird die Endstufe gesperrt bzw. gegebenenfalls durch einen weiteren nicht dargestellten Schalter der Aktor 10 von der Stromversorgung getrennt, so dass eine Beschädigung des Aktors und nachgeschalteter Elemente der Kupplungsübertragung vermieden wird.

Mit dem geschilderten Verfahren wird erreicht, dass ein Notlaufprogramm, das beispielsweise nach dem bzw. im Schritt 50 aktiviert wird, selbsttätig wieder verlassen wird, wenn ein EMV-Fehler nicht andauert.

## Patentansprüche

1. Verfahren zum Verbessern der Funktionalität einer elektronischen Steuervorrichtung, insbesondere zur Betätigung einer Kupplung und/oder eines Getriebes in einem Fahrzeugantriebsstrang, enthaltend folgende Schritte
- Feststellen ob ein Lagereglerfehler, der **dadurch** definiert ist, dass ein elektrischer Aktor von einem Steuersignal zum Anfahren einer von einer augenblicklichen Ist-Position abweichenden Soll-Position angesteuert wird und die Soll-Position nicht anfährt, vorhanden ist (42) und falls ja, Feststellen, ob der Aktorstrom größer ist als ein vorbestimmter Schwellwert (44), und falls ja,
- Setzen eines "Blockade-Fehler-Flag (46)", und falls nein
- Setzen eines "Elektromagnetische Verträglichkeits-Fehler-Flag" (48).

2. Verfahren nach Anspruch 1, wobei das "Elektromagnetische Verträglichkeits-Fehler-Flag" mindestens während einer vorbestimmten Zeitdauer gesetzt bleibt.

3. Verfahren nach Anspruch 1 oder 2, wobei bei gesetztem "Elektromagnetische Verträglichkeits-Fehler-Flag" keine für den Fahrer unerwartete Momentenreaktion am Fahrzeugantriebsstrang erfolgen kann.

4. Verfahren nach Anspruch 3, wobei der elektrische Aktor ein Aktor zum Betätigen einer zwischen einem Motor und einem Getriebe eines Fahrzeugs angeordneten Kupplung ist und das "Elektromagnetische Verträglichkeits-Fehler-Flag" erst rückgesetzt wird, wenn nach Feststellen der Beendigung des Lagereglerfehlers das Getriebe in einem Neutralgang ist oder das Kupplungsmoment Null beträgt oder eine Schaltabsicht festgestellt wird oder die Kupplung zum Anhalten geöffnet wird.

5. Verfahren nach einem der Ansprüche 1 bis 4, wobei nach Ausschalten der Zündung das "Elektromagnetische Verträglichkeits-Fehler-Flag" rückgesetzt wird, anschließend überprüft wird, ob ein Lagereglerfehler vorhanden ist und, falls nicht, ein Stillsetzschritt durchgeführt wird.

6. Vorrichtung zum Verbessern der Funktionalität einer elektronischen Steuervorrichtung, insbesondere zur Betätigung einer Kupplung und/oder eines Getriebes in einem Fahrzeugantriebsstrang, enthaltend
- einen von einer Endstufe (24) gespeisten elektrischen Aktor (10) mit einem Betätigungsglied (12);
- einen Sensor (28) zum Erfassen der Position des Betätigungsgliedes,
- eine Strommmesseinrichtung (36) in einer Zuleitung zu dem Aktor, und ein mit der Endstufe, dem Sensor und dem Strommessgerät verbundenes elektronisches Steuergerät (26) mit einem Mikroprozessor (28) und zugehörigen Speichereinrichtungen, das abhängig von Eingangssignalen ein Ausgangssignal zum Ansteuern der Endstufe derart erzeugt, dass der Aktor (10) das Betätigungsglied bei fehlerfreier Funktion in eine vorbestimmte Sollposition bewegt, wobei der Betrieb des Steuergerätes bei Auftreten eines Lagereglerfehlers nach einem Verfahren entsprechend einem der Ansprüche 1 bis 5 erfolgt.

## Claims

1. Method for improving the functionality of an electronic control apparatus, in particular for operating a clutch and/or a transmission in a vehicle drive train, comprising the following steps
- establishing whether a position controller error, which is defined by an electrical actuator being actuated by a control signal for the purpose of moving towards a setpoint position, which differs from a momentary actual position, and not moving towards the setpoint position, is present (42) and, if yes, establishing whether the actuator current is greater than a predetermined threshold value (44) and, if yes,
- setting a "blockade error flag" (46) and, if no,
- setting an "electromagnetic compatibility error flag" (48).

2. Method according to Claim 1, wherein the "electromagnetic compatibility error flag" remains set at least over a predetermined time period.

3. Method according to Claim 1 or 2, wherein no torque response which is not expected by the driver can take place in the vehicle drive train when the "electromagnetic compatibility error flag" is set.

4. Method according to Claim 3, wherein the electrical actuator is an actuator for operating a clutch which is arranged between an engine and a transmission of a vehicle, and the "electromagnetic compatibility error flag" is reset only when, after the end of the position controller error is established, the transmission is in a neutral gear or the clutch torque is zero or a shift intention is established or the clutch is opened for stopping purposes.

5. Method according to one of Claims 1 to 4, wherein the "electromagnetic compatibility error flag" is reset after the ignition is switched off, a check is then made as to whether a position controller error is present and, if not, a stop step is carried out.

6. Apparatus for improving the functionality of an electronic control apparatus, in particular for operating a clutch and/or a transmission in a vehicle drive train, comprising
- an electrical actuator (10) which is fed by an output stage (24) and has an operating element (12),
- a sensor (28) for detecting the position of the operating element,
- a current-measuring device (36) in a supply line to the actuator, and an electronic controller (26) which is connected to the output stage, the sensor and the ammeter and has a microprocessor (28) and associated memory devices and which, as a function of input signals, generates an output signal for actuating the output stage in such a way that the actuator (10) moves the operating element to a predetermined setpoint position in the event of error-free functioning, wherein the controller operates in accordance with a method as per one of Claims 1 to 5 when a position controller error occurs.

## Revendications

1. Procédé pour améliorer la fonctionnalité d'un dispositif de commande électronique, notamment pour actionner un embrayage et/ou une boîte de vitesses dans la chaîne de transmission d'un véhicule comprenant les étapes suivantes :
- Déterminer s'il existe une erreur de réglage de position (42), laquelle est définie en ce qu'un actionneur électrique est commandé par un signal de commande pour gagner une position de consigne différente d'une position réelle momentanée et qu'il ne gagne pas cette position de consigne, et, dans l'affirmative,
- Déterminer si le courant de l'actionneur est supérieur à une valeur de seuil prédéfinie (44) et, dans l'affirmative,
- Mettre à 1 un « marqueur de défaut de blocage » (46) et, le cas contraire,
- Mettre à 1 un « marqueur de défaut de compatibilité électromagnétique » (48).

2. Procédé selon la revendication 1, le « marqueur de défaut de compatibilité électromagnétique » restant à 1 au moins pendant une durée prédéterminée.

3. Procédé selon la revendication 1 ou 2, aucune réaction momentanée inattendue du conducteur ne pouvant avoir lieu sur la chaîne de transmission du véhicule tant que le « marqueur de défaut de compatibilité électromagnétique » est à 1.

4. Procédé selon la revendication 3, l'actionneur électrique étant un actionneur pour actionner un embrayage disposé entre un moteur et une boîte de vitesses d'un véhicule et le « marqueur de défaut de compatibilité électromagnétique » n'étant remis à 0 qu'après avoir constaté la fin de l'erreur de réglage de position, si la boîte de vitesses se trouve dans une position neutre, si le moment d'embrayage est nul, si une intention de changement de rapport est constatée ou si l'embrayage est ouvert en vue de s'arrêter.

5. Procédé selon l'une des revendications 1 à 4, le « marqueur de défaut de compatibilité électromagnétique » étant remis à 0 après avoir coupé l'allumage, un contrôle de présence d'erreur de réglage de position étant ensuite effectué et, si ce n'est pas le cas, une étape d'immobilisation étant exécutée.

6. Dispositif pour améliorer la fonctionnalité d'un dispositif de commande électronique, notamment pour actionner un embrayage et/ou une boîte de vitesses dans la chaîne de transmission d'un véhicule comprenant :
- Un actionneur (10) électrique alimenté par un étage final (24) et muni d'un élément d'actionnement (12),
- Un capteur (28) pour détecter la position de l'élément d'actionnement,
- Un dispositif de mesure du courant (36) dans un câble d'arrivée vers l'actionneur et un appareil de commande (26) électronique relié avec l'étage final, le capteur et le dispositif de mesure du courant, comprenant un microprocesseur (28) et des dispositifs de mémorisation associés, qui génère un signal de sortie destiné à commander l'étage final en fonction des signaux d'entrée de telle sorte que l'actionneur (10), lors d'un fonctionnement sans défaut, déplace l'élément d'actionnement dans une position de consigne prédéfinie, le fonctionnement de l'appareil de commande dans le cas d'une erreur de réglage de position s'effectuant conformément à un procédé selon l'une des revendications 1 à 5.
